# EUROPEAN PATENT APPLICATION

(11) **EP 1 232 997 A1**
(43) Date of publication of application: **21.08.2002**
(21) Application number: 02003453.4
(22) Date of filing: 14.02.2002
(51) Int. Cl.: C01B 21/46, C01B 7/07, C23G 1/36, C23F 1/20, B41N 3/03

(54) **Method of treating an acid treatment solution, device for treating the solution, and method of fabricating a support for a planographic printing plate**

(30) Priority: 15.02.2001 JP 2001038159
(71) Applicant: FUJI PHOTO FILM CO., LTD., Kanagawa (JP)
(72) Inventor: Kimura, Toru, Fuji Photo Film Co., Ltd., Haibara-gun, Shizuoka-ken (JP); Hirokawa, Tsuyoshi, Fuji Photo Film Co., Ltd., Haibara-gun, Shizuoka-ken (JP); Yamazaki, Toru, Fuji Photo Film Co., Ltd., Haibara-gun, Shizuoka-ken (JP)
(74) Representative: Grünecker, Kinkeldey, Stockmair & Schwanhäusser Anwaltssozietät

(57) **Abstract**

A method of treating an acid treatment solution which includes steps of adding sulfuric acid to an acid treatment solution which contains therein non-alkaline metal ions to produce sulfate, and recovering the regenerated acid treatment solution from the acid treatment solution to which the sulfuric acid has been added by separating the sulfate therefrom. Also, a device for realizing the method, and a method of fabricating a support for a planographic printing plate using the same.

## Description

### BACKGROUND OF THE INVENTION

### Field of the Invention

The present invention relates to a method of treating an acid treatment solution and a device for treating the solution. More particularly, the present invention relates to a method of treating an acid treatment solution and a device for treating the same, which method and device can suitably be used for collection and/or reuse of an acid electrolyte which is discharged when an electrolytic surface-roughening treatment is conducted on a surface of an aluminum web during fabrication of a support for a planographic printing plate.

The present invention also relates to a method of fabricating a support for a planographic printing plate. More particularly, the present invention relates to a method of fabricating a support for a planographic printing plate that includes an electrolytic surface-roughening step for surface-roughening an aluminum plate, and in which an acid electrolyte discharged during the electrolytic surface-roughening step is treated with the aforementioned method of treating the acid treatment solution.

### Description of the Related Art

In an electrolytic surface-roughening step for the fabrication of a support for a planographic printing plate, AC (alternating current) electrolysis is conducted such that an aluminum web is sequentially passed through an AC electrolytic bath which contains an acid electrolyte in which a strong acid such as hydrochloric acid, nitric acid, or the like is mixed. In the electrolytic surface-roughening step, if the concentration of aluminum ions in the acid electrolyte changes, the surface state of the obtained support for a planographic printing plate changes greatly. Therefore, in order to obtain a quality-stabilized support for a planographic printing plate, it is extremely important to maintain a constant concentration of aluminum ions in the acid electrolyte.

Conventionally, in order to maintain the constant concentration of the aluminum ions in the acid electrolyte, a method has generally been adopted in which dilution water and nitric acid are added to the acid electrolyte such that the concentration of aluminum ions therein changes.

However, this method causes a problem that the larger the amount of the acid electrolyte discharged as waste fluid, the larger the load for waste disposal became.

Further, a problem is caused that the amounts of strong acid such as nitric acid used increases.

In order to solve these problems, a method in which the acid electrolyte is electrodialyzed so that aluminum ions are removed from the acid electrolyte, and the remaining nitric acid is collected, has been thought of.

As an example of this method, a method has been studied in which the acid electrolyte in itself is electrodialyzed so that aluminum ions are removed.

However, this method causes a problem that a collected proportion of the nitric acid is low and there is little effect with regard to reducing an amount of the nitric acid to be used.

### SUMMARY OF THE INVENTION

In view of the aforementioned facts, an object of the present invention is to provide a method of treating an acid treatment solution which method is capable of removing metal ions such as aluminum ions effectively and greatly reducing an amount in which nitric acid should be used. Further, another object is to provide a device for conducting the method, and a method for fabricating a support for a planographic printing plate wherein an amount of waste fluid discharged and an amount of nitric acid used can be reduced a great deal by reusing an acid electrolyte by applying the method of treating the acid treatment solution to an electrolytic surface-roughening step of the method for fabricating a support.

A first aspect of the present invention is a method of treating an acid treatment solution which includes at least one of nitric acid and hydrochloric acid, for removing non-alkaline metal ions therefrom. The method comprises the steps of:
determining an amount of the non-alkaline metal ions in the acid treatment solution;
adding a sulfuric acid to the acid treatment solution in an amount based on the amount of the non-alkaline metal ions to produce sulfate of the non-alkaline metal;
recovering an acid treatment solution from which the sulfate is separated such that the sulfate is separated from the acid treatment solution to which the sulfuric acid has been added.

Examples of the acid treatment solutions treated in the method of treating the acid treatment solution include those which have been used for a surface treatment or washing of metal and contain nitric acid and/or hydrochloric acid as acidic components.

In the method of treating the acid treatment solution, sulfuric acid is added to the acid treatment solution in an amount that corresponds to a content of non-alkaline metal ions such as aluminum ions contained in the acid treatment solution, and the non-alkaline metal is removed as a sulfate salt. Accordingly, an acid component such as a nitric acid can be collected in high concentration. Herein, the content of the non-alkaline metal ions may mean a concentration of the non-alkaline metal ions or an amount in which the non-alkaline metal ions are contained in the whole acid treatment solution to be treated.

Further, since most of sulfates that can be produced during the acid treatment solution recovering step are useful materials such as sulfuric aluminum sulfate, they often can be sold on. Moreover, the remaining acid treatment solution separated from the sulfate can be reused for the surface treatment or for washing of metals. Hence, in the method of treating the acid treatment solution, almost no waste is produced.

In the present invention, during the acid treatment solution recovering step, it is preferable to separate the sulfate by electrodialysis using ion-exchange membranes.

Since the sulfate is removed by the electrodialysis, the running costs are inexpensive, and the acid such as nitric acid can be collected in especially high concentrations.

Further, in the present invention, during the acid treatment solution recovering step, it is preferable to use a positive ion-exchange membrane and a negative ion-exchange membrane as the ion-exchange membranes.

Since ordinary positive ion-exchange membranes and negative ion-exchange membranes can be used as the ion-exchange membranes, use of special ion-exchange membranes such as bipolar membranes is not needed.

In the present invention, the non-alkaline metal may be aluminum.

In this case, during the acid treatment solution recovering step, aluminum sulfate, which can be used for various purposes, can be collected.

Accordingly, in accordance with the method of treating the acid treatment solution, not only can the acid treatment solution be regenerated, the aluminum contained therein can be collected as a valuable material.

In the present invention, the acid treatment solution that contains non-alkaline metal ions and at least one of nitric acid and hydrochloric acid can be an acid treatment solution which is used in an electrolytic surface-roughening step in which an aluminum plate is surface-roughened, in the method of fabricating the support for a planographic printing plate. That is, the acid treatment solution that is to be treated may be an acid electrolysis solution that has been used for a process of electrolytically surface-roughening an aluminum plate in a method for fabricating a support of a planographic printing plate, and the recovered acid treatment solution may be suitable for re-use in the process.

In accordance with the method of treating the acid treatment solution, an amount in which the acid electrolyte is used in the electrolytic surface-roughening step can be greatly reduced.

A second aspect of the present invention is a device for treating an acid treatment solution which includes at least one of nitric acid and hydrochloric acid, for removing non-alkaline metal ions therefrom. The device comprises:
a sulfuric acid addition component which adds sulfuric acid to the acid treatment solution in an amount based on an amount of the non-alkaline metal ions in the acid treatment solution to produce sulfate of non-alkaline metal; and
an acid treatment solution recovery component which separates the sulfate from the acid treatment solution to which the sulfuric acid has been added and recovers the acid treatment solution. The sulfuric acid addition component can receive the acid treatment solution and the sulfuric acid. Further, the acid treatment solution recovery component can be connected in fluid communication with the sulfuric acid addition component and the like.

The device for treating the acid treatment solution can suitably be used for implementing the method of treating the acid treatment solution.

A third aspect of the present invention is a method for fabricating a support for a planographic printing plate. the method comprises the steps of:
electrolytically surface-roughening an aluminum plate by an AC electrolysis thereon in an acid electrolyte that contains at least one of nitric acid and hydrochloric acid, in an AC electrolysis bath;
drawing at least a portion of the acid electrolyte in the AC electrolysis bath out of the AC electrolysis bath;
adding sulfuric acid to the acid electrolyte that has been drawn out of the AC electrolysis bath, in an amount based on an amount of aluminum ions in the acid electrolyte that has been drawn, so that aluminum sulfate is generated; and
recovering an acid electrolyte from the acid electrolyte to which the sulfuric acid has been added, by separating the aluminum sulfate; and returning the recovered acid electrolyte to the AC electrolysis bath.

In the method of fabricating the support for a planographic printing plate, since the acid electrolyte which is taken out of the AC electrolytic bath is returned thereto after aluminum sulfate has been removed, almost no acid electrolyte is expected to be discharged to the exterior.

As a result, both a load for waste fluid disposal and an amount in which the nitric acid is used can decrease a great deal, thereby reducing surface treatment costs.

### BRIEF DESCRIPTION OF THE DRAWINGS

Fig. 1 is a schematic cross-sectional view of an example of an electrodialysis bath, which is used in a desalting step of the present invention.
Fig. 2 is a schematic view of an example in which a method of treating an acid treatment solution according to the present invention is applied to an electrolytic surface-roughening treatment component which forms a part of a surface-roughening treatment device for surface-roughening the surface of an aluminum web to be used for a planographic printing plate support.
Fig. 3 is a schematic cross sectional view of a structure of an electrodialysis bath used in Comparative Example 1.

### DESCRIPTION OF THE PREFERRED EMBODIMENT

A method of treating an acid treatment solution of the present invention has steps of: adding sulfuric acid in an amount that substantially corresponds to a content of non-alkaline metal ions in the acid treatment solution to the acid treatment solution; and collecting remaining acid treatment solution after sulfate that was produced during the sulfate addition step has been separated from the acid treatment solution to which the sulfuric acid was added.

As described above, the acid treatment solution to be treated contains at least one of nitric acid and hydrochloric acid, and a non-alkaline metal.

The non-alkaline metal can be metals which are included in neither alkaline metals nor alkaline earth metals can be used, and specific examples thereof include typical metals belonging to group 3B of the elements, and transition metals such as iron, nickel, chromium, titanium, copper, and silver.

The acid treatment solution may comprise on or more acids besides nitric acid and hydrochloric acid. Examples of such acid treatment solutions include a surface treatment solution which is used for the surface treatment of metals, and a metal washing solution which has been used for washing a metal. Specific examples of the surface treatment solution include an acid electrolyte which is circulated for use during an electrolytic surface-roughening step in a method for fabricating a support for a planographic printing plate.

In this acid electrolyte, principally, nitric acid is used as an acidic component. As the non-alkaline metal, mainly, aluminum is contained in the acid electrolyte.

Besides the above-described electrolyte solution, examples of the surface treatment solution include an alumite treatment solution that has been used for a surface treatment such as an alumite treatment of an aluminum product.

Examples of the metal washing solution include a pickling solution can be used. Examples of the pickling solution include a solution mainly containing hydrochloric acid as an acidic component which is used for removing rust and grease from iron products, and a solution containing nitric acid and hydrofluoric acid which is used for washing out soiling from stainless products. Examples of non-alkaline metals contained in the pickling solution include iron, chromium, and nickel. An example of the metal washing solution is an aluminum acidic washing solution used for washing the surface of an aluminum product.

The sulfuric acid that is added to the acid treatment solution during the sulfuric acid addition step may be concentrated sulfuric acid or dilute sulfuric acid. However, dilute sulfuric acid is preferably used from a viewpoint of safety. Further, the sulfuric acid is added so as to substantially match the amount of the non-alkaline metal in the acid treatment solution.

During the acid treatment solution recovery step, examples of a method for separating non-alkaline metal sulfate from the acid treatment solution include an electrodialysis method using an ion-exchange membrane, a diffusion dialysis method using a semipermeable membrane, and the like. However, the electrodialysis method using the ion-exchange membrane is preferable, since an acid treatment solution in which nitric acid and/or hydrochloride acid is contained in high concentration can be collected easily.

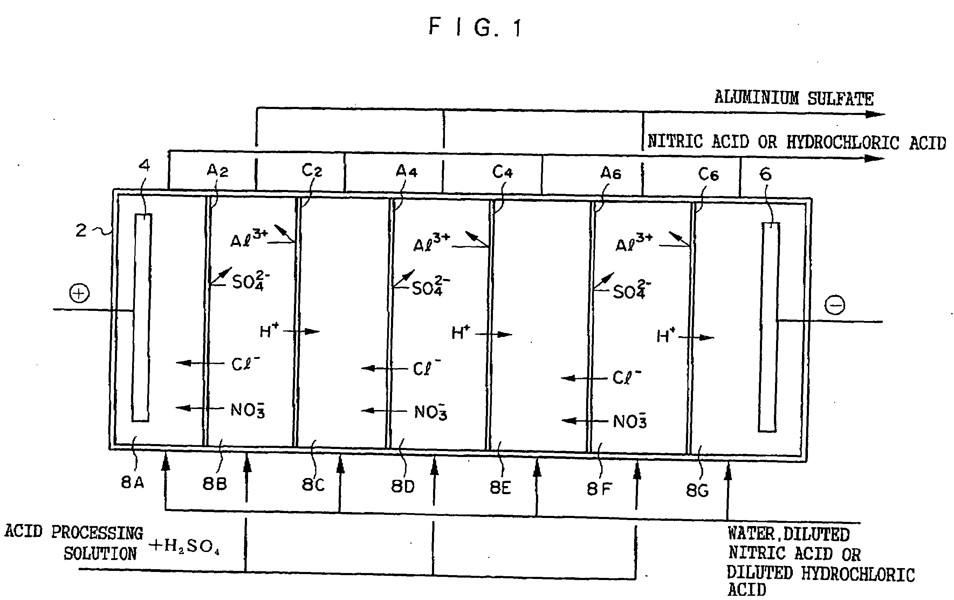

An example of an electrodialysis bath used in the electrodialysis method is shown in Fig. 1.

An electrodialysis bath 2 is formed into a long rectangular cuboid shape. The electrodialysis bath 2 has an anode 4 which is disposed along a width direction in the vicinity of a surface of one end wall and a cathode 6 which is disposed in the vicinity of a surface of the other end wall.

Between the anode 4 and the cathode 6 provided in the electrodialysis bath 2, negative ion-exchange membranes A₂, A₄, and A₆, and positive ion-exchange membranes C₂, C₄, and C₆ are disposed alternately and parallel to one another. The interior of the elecrodialysis bath 2 is divided into seven chambers 8A to 8G by these membranes. Further, the negative ion-exchange membranes A₂, A₄, and A₆ are respectively located such that they are located at the anode 4 sides of the chambers 8B, 8D, and 8F, and the positive ion-exchange membranes C₂, C₄, and C₆ are respectively located such that they are located at the cathode 6 sides of the same. Here, the chamber 8A is a section having the anode 4 at the interior thereof, and the chamber 8G is a section having the cathode 6 at the interior thereof. The number of negative ion-exchange membranes can correspondsto the number of positive ion-exchange membranes. It is preferable that the number of chambers is an odd number. The negative ion-exchange membranes forming the chambers can be located closer to the anode side. That is, the electrodialysis bath 2 can have at least one set of a negative ion-exchange membrane and a positive ion-exchange membrane wherein the set is interposed between the anode and the cathode and the negative ion exchange membrane is disposed closer to the anode side and the positive ion-exchange membranes disposed is closer to the cathode side.

As shown in Fig. 1, the acid treatment solution to which the sulfuric acid has been added during the sulfuric acid addition step is supplied into the chambers 8B, 8D, and 8F. Meanwhile, at least one of water, dilute nitric acid or dilute hydrochloric acid is supplied into the chambers 8A, 8C, 8E, and 8G. That is, the electrodialysis bath can contain at least an anode, cathode and at least one set of membranes which is located between the anode and the cathode. Each set of membranes may include negative and positive ion-exchange membranes, with the negative ion-exchange membrane of each set provided in the bath being disposed closer to the anode than the positive ion-exchange membrane of the set such that a first chamber is formed between the negative and positive ion-exchange membranes, and second chambers being formed at portions of the electrodialysis bath other than the first chamber of each set. The acid treatment solution to which the sulfuric acid has been added can be supplied to the first chamber of each set, and at least one liquid selected from a group consisting of water, a dilute nitric acid, and a dilute hydrochloric acid can be supplied to each of the second chambers

Among positive ions and negative ions that are contained in the acid treatment solution, nitric acid ions and chlorine ions, can pass through the negative ion-exchange membranes A₂, A₄, and A₆. Therefore, when an electric current flows between the anode and the cathode, the nitric acid ions and the chlorine ions in the chambers 8B, 8D, and 8F are electrically attracted to the anode 4, move toward the chambers 8A, 8C, and 8E which are provided at the side closer to the anode 4 relative to the chambers 8B, 8D, and 8F and pass through the negative ion-exchange membranes A₂, A₄, and A₆. Meanwhile, hydrogen ions, which can pass through the positive ion-exchange membranes C₂, C₄, and C₆, are attracted to the cathode 6, pass through the positive ion-exchange membranes C₂, C₄, and C₆, and move toward the chambers 8C, 8E, and 8G which are located at the side closer to the cathode 6 relative to the chambers 8B, 8D, and 8F.

Among the positive ions and negative ions, sulfuric acid ions are less likely to pass through the negative ion-exchange membranes A₂, A₄, and A₆ than the nitric acid ions and the chlorine ions, and aluminum ions, iron ions, trivalent chromium ions, and the like are less likely to pass through the positive ion-exchange membranes C₂, C₄, and C₆. Therefore, the sulfuric acid ions and the aluminum ions, iron ions, trivalent chromium ions, and the like remain inside the chambers 8B, 8D, and 8F.

Accordingly, nitric acid and hydrochloric acid of high purity can be obtained in high concentration at the chambers 8A, 8C and 8E, while non-alkaline metal sulfates such as aluminum sulfate, ferric sulfate and the like are produced at the chambers 8B, 8D, and 8F. The nitric acid and/or hydrochloric acid collected at the chambers 8A, 8C, and 8E can be reused as the acid treatment solution. The nitric acid and/or hydrochloric acid or water collected at the chambers 8G may be reused. That is, by performing electrodialysis by supplying electric current to the anode and the cathode, the acid treatment solution from which the sulfate can be separated from at least one of or each of the second chambers. On the other hand, a liquid which includes sulfate may be drawn from the first chamber of each set. The membranes used in the present invention can be suitably selected in accordance with the purpose of the present invention.

Being different from an electrodialysis method in which an alkali such as sodium hydroxide is added to an acid electrolyte solution, the electrodialysis method of the present invention simply uses, as the ion-exchange membranes in the electrodialysis bath 2, ordinary positive ion-exchange membranes and negative ion-exchange membranes. That is, the method of the present invention does not require use of special and expensive ion-exchange membranes such as a bipolar membrane in which a positive ion-exchange layer and a negative ion-exchange layer are stacked with one another. As a result, in the present electrodialysis method, inexpensively fabricated membranes can be used.

Further, compared to the case in which the acid treatment solution is electrodialyzed by adding alkali such as sodium hydroxide, the method and device of the present invention can lower a theoretical decomposing voltage and consume little electricity.

Furthermore, in the present invention, electrodialysis of the present invention is conducted within an acidic region. Therefore, separation of calcium hydroxide and the like does not occur inside the elecrodialysis bath 2, thus preventing the ion-exchange membranes from being damaged.

Next, a description of an example is provided in which the method and the device for treating the acid treatment solution according to the present invention provided as an electrolytic surface-roughening treatment component which structural part of surface-roughening treatment device for fabricating a support for a planographic printing plate by surface-roughening an aluminum web.

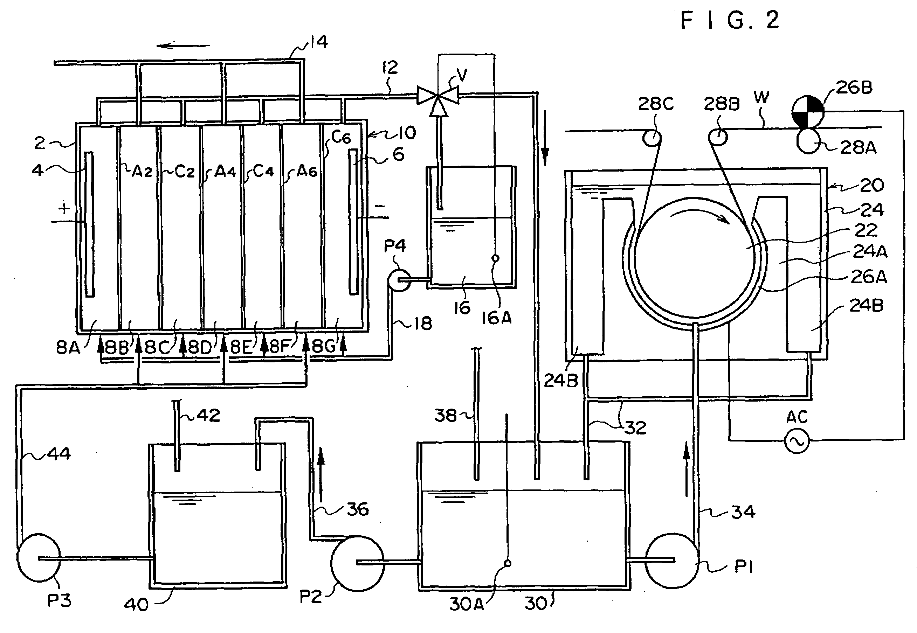

An example of this electrolytic surface-roughening treatment device (component) is shown in Fig. 2. In this figure, portions identical to those shown in Fig. 1 are denoted by the same reference numerals.

As shown in Fig. 2, the electrolytic surface-roughening treatment device has: an electrolytic surface-roughening section 20 in which an aluminum web W is surface-roughened by electrolysis; an electrolyte circulation bath 30 in which an acid electrolyte drawn from the electrolytic surface-roughening section 20 is temporarily reserved; a sulfuric acid addition bath 40 in which sulfuric acid is added to acid electrolyte that is drawn from the electrolyte circulation bath 30; and an electrodialyser 10 in which the acid electrolyte to which the sulfuric acid has been added in the sulfuric acid addition bath 40 is electrodialyzed to be separated into a collection solution mainly containing nitric acid and a deacidified solution mainly containing aluminum sulfate, the collection solution then being returned to the electrolyte circulation bath 30.

As also shown in Fig. 2, the electrolyte surface-roughening section 20 has: a cylindrical web feeding drum 22 for transporting the aluminum web W by rotating around an axis that extends along a horizontal direction; and an AC electrolysis bath 24 which is formed substantially into a rectangular cuboid shape whose upper surface is open, which has therein a web feeding drum accommodation portion 24A for accommodating the web feeding drum 22, and which contains the acid electrolyte.

An opening portion of the web feeding drum accommodation portion 24A is located beneath an opening of the AC electrolysis bath 24.

An internal wall surface of the web feeding drum accommodation portion 24A is formed into a substantially cylindrical shape which is concentric with the web feeding drum 22, and is provided with a partial cylindrical electrode 26A provided so as to surround the web feeding drum 22. A power supply roller 26B is provided above the AC electrolysis bath 24, and rotates while abutting the aluminum web W. A web receiving roller 28A for accepting the aluminum web W from the downward is provided opposing the power supply roller 26B in a state in which the aluminum web W is nipped between the web receiving roller 28A and the power supply roller 26B. The cylindrical electrode 26A and the power supply roller 26B are connected to an AC power supply, and function to apply AC from the AC power supply to the aluminum web W.

An inlet side guide roller 28B and an exit side guide roller 28C are provided above the AC electrolysis bath 24. The inlet side guide roller 28B guides the aluminum web W which has passed between the power supply roller 26B and the web receiving roller 28A into an interior of the AC electrolysis bath 24. The exit side guide roller 28C guides the aluminum web W which has passed through the interior of the AC electrolysis bath 24 to the outside of the AC electrolysis bath 24.

An acid electrolyte receiving portion 24B, which receives acid electrolyte which has overflown from the upper end opening portion of the web feeding drum accommodation portion 24A, is provided in the AC electrolysis bath 24 at the exterior of the web feeding drum accommodation portion 24A. An acid electrolyte drawing conduit 32, which draws acid electrolyte reserved in the acid electrolyte receiving portion 24B out of the AC electrolysis bath 24, is provided at the bottom surface of the acid electrolyte receiving section 24B.

As further shown in Fig. 2, the electrolyte circulation bath 30 for temporarily reserving the acid electrolyte which has been drawn from the acid electrolyte drawing conduit 32 is provided beneath the electrolytic surface-roughening section 20. Aluminum ions concentration meter 30A (component determining an amount of the non-alkaline metal ions) for measuring concentration of aluminum ions is provided at the interior of the electrolyte circulation bath 30. In the present invention, one or more aluminum ion concentration meter may be installed suitably at any portion. As the aluminum ion concentration meter 30A, a meter ordinarily used for measuring concentrations of aluminum ions may be used. More specifically, a meter for measuring a concentration of aluminum ions by detecting electrical conductivity or a change of sound velocity in a solution can be used.

An acid electrolyte returning conduit 34 which returns the acid electrolyte in the interior of the electrolyte circulation bath 30 to the AC electrolysis bath 24, and an acid electrolyte transfer conduit 36 which transfers the acid electrolyte to the sulfuric acid addition bath 40 are connected to the vicinity of a bottom surface of the electrolyte circulation bath 30. A pump P1 which transfers the acid electrolyte to the AC electrolysis bath 24 is mounted to the acid electrolyte returning conduit 34. A pump P2 which transfers the acid electrolyte to the sulfuric acid addition bath 40 is mounted to the acid electrolyte transfer conduit 36. Further, a nitric acid supplying conduit 38 which supplies the acid electrolyte with nitric acid is provided at the electrolyte circulation bath 30.

The sulfuric acid addition bath 40 is provided with a sulfuric addition conduit 42 for adding sulfuric acid, and a sulfuric acid-added electrolyte transfer conduit 44 for transferring the acid electrolyte to which the sulfuric acid has been added in the sulfuric addition bath 40 to the electrodialyser 10. A pump P3 is mounted to the sulfuric acid-added electrolyte transfer conduit 44.

The electrodialyser 10 is structured as shown in Fig. 1 and Fig. 2, and has: the electrodialysis bath 2 for separating the acid electrolyte into the collection solution which contains dilute nitric acid as a main component and the deacidified solution which contains aluminum sulfate as a main component; a collection solution reservoir 16 for temporarily reserving the collection solution; a collection solution drawing conduit 12 for connecting the electrodialysis bath 2 to the collection solution reservoir 16 and the electrolyte circulation bath 30; and a deacidified solution drawing channel 14 for drawing the deacidified solution from the electrodialysis bath 2. That is, the sulfuric acid added electrolyte transfer conduit and the deacidified solution drawing conduit may be both connected to the first chamber of each set, and the collection solution supply conduit and the collection solution drawing conduit may be both connected to the second chamber. As shown in Fig. 1 and Fig. 2, it is preferable to provide the collection solution drawing conduit 12 and the deacidified solution drawing channel 14 alternately to the respective chambers of the electrodialysis bath 2. The collection solution drawing conduit 12 is branched into a conduit which leads to the collection solution reservoir 16 and a conduit which leads to the electrolyte circulation bath 30, and a three-way valve V is mounted at the branching portion of the collection solution drawing conduit 12. By this three-way valve V, the collection solution drawing conduit 12 can be switched to draw from the electrodialysis bath 2 to either the conduit that leads to the collection solution reservoir 16 or the conduit that leads to the electrolyte circulation bath 30. The collection solution reservoir 16 is provided with a concentration meter 16A (component for determining a concentration of acid) for measuring concentration of nitric acid in the collection solution. As the concentration meter 16A, a hydrogen-ion concentration meter can be used, for example. Switching of channels by means of the three-way valve V may be carried out in response to signals from the concentration meter 16A. The component for determining a concentration of acid may be provided to another position of the device.

A collection solution supply conduit 18 for supplying the collection solution which has been reserved in the collection solution reservoir 16 to the electrodialysis bath 2 is connected to the collection solution reservoir 16. A pump P4 is mounted to the collection solution supply conduit 18.

As shown in Fig. 2, in the electrodialysis bath 2, the sulfuric acid added electrolyte transfer conduit 44 is connected to respective bottom surfaces of the chambers 8B, 8D, and 8F, and the deacidified solution drawing channel 14 is connected to ceiling surfaces of the same. On the other hand, the collection solution supply conduit 18 is connected to respective bottom surfaces of the chambers 8A, 8C, 8E, and 8G and the collection solution drawing conduit 12 is connected to ceiling surfaces of the same.

Operation of the electrolytic surface-roughening treatment device that is shown in Fig. 2 will now be explained.

When the acid electrolyte in the electrolyte circulation bath 30 is supplied, through the acid electrolyte returning conduit 34, to a bottom surface of the web feeding drum accommodation portion 24A in the AC electrolysis bath 24, the acid electrolyte ascends a channel between the cylindrical electrode 26A accommodated in the web feeding drum accommodation portion 24A, and an outer wall surface of the web feeding drum 22. The acid electrolyte overflows from the upper end opening portion of the web feeding drum accommodation portion 24A into the acid electrolyte receiving portion 24B, and is reserved therein. The acid electrolyte reserved in the acid electrolyte receiving portion 24B passes through the acid electrolyte drawing conduit 32, and returns to the electrolyte circulation bath 30.

While the acid electrolyte is thus circulated between the AC electrolyte bath 24 and the electrolyte circulation bath 30, AC current is applied to the cylindrical electrode 26A and the power supply roller 26B, and the aluminum web W is fed from a right hand side to a left hand side of Fig. 2 by the web feeding drum 22. Accordingly, the surface of the aluminum web W is AC-electrolyzed and surface-roughened.

The acid electrolyte inside the electrolyte circulation bath 30 is further transferred through the acid electrolyte transfer conduit 36 to the sulfuric acid addition bath 40. In the sulfuric acid addition bath 40, sulfuric acid is added to the acid electrolyte in an amount that corresponds to the concentration of aluminum ions measured by the concentration meter for aluminum ions 30A in the acid electrolyte circulation bath 30. The concentration of sulfuric acid in the acid electrolyte to which the sulfuric acid has been added in the sulfuric acid addition bath 40 can be measured, for example, by adding a barium salt thereto and measuring a precipitated amount of barium sulfate.

The acid electrolyte to which the sulfuric acid has been added in the sulfuric acid addition bath 40 is supplied, through the sulfuric acid added electrolyte transfer conduit 44, into the lower portions of the chambers 8B, 8D, and 8F of the electrodialysis bath 2.

The collection solution inside the collection solution reservoir 16 passes through the collection solution supply conduit 18, and is supplied into the chambers 8A, 8C, 8E, and 8G adjacent to the chambers 8B, 8D, and 8F.

Nitric acid ions in the acid electrolyte can pass through any of the negative ion-exchange membrane A₂ which divides the electrodialysis bath 2 between the chamber 8A and the chamber 8B, the negative ion-exchange membrane A₄ which divides the electrodialysis bath 2 between the chamber 8C and the chamber 8D, and the negative ion-exchange membrane A₆ which divides the electrodialysis bath 2 between the chamber 8E and the chamber 8F. However, sulfuric acid ions cannot pass through these negative ion-exchange membranes A₂, A₄, and A₆. Further, hydrogen ions in the acid electrolyte can pass through any of the positive ion-exchange membrane C₂ which divides the electrodialysis bath 2 between the chamber 8B and the chamber 8C, the positive ion-exchange membrane C₄ which divides the electrodialysis bath 2 between the chamber 8D and the chamber 8E, and the positive ion-exchange membrane C₆ which divides the electrodialysis bath 2 between the chamber 8F and the chamber 8G. However, aluminum ions do not pass through these positive ion-exchange membranes C₂, C₄, and C₆.

Among negative ions contained in the chambers 8B, 8D, and 8F, nitric acid ions are attracted to the anode 4, and pass through the negative ion-exchange membranes A₂, A₄, and A₆ and move into the chambers 8A, 8C and 8E. However, sulfuric acid ions remain inside the chambers 8B, 8D, and 8F. In a manner similar to the negative ions, among positive ions contained in the chambers 8B, 8D, and 8F, hydrogen ions are attracted to the cathode 6, and pass through the negative ion-exchange membranes C₂, C₄, and C₆ and move into the chambers 8C, 8E and 8G. However, aluminum ions remain inside the chambers 8B, 8D, and 8F.

Therefore, the nitric acid is removed from the thus supplied acid electrolyte at the chambers 8B, 8D, and 8F, and a deacidified solution that contains aluminum sulfate as a main component remains in the chambers 8B, 8D, and 8F.

Water or dilute nitric acid can be reserved in the collection solution reservoir 16. The water or dilute nitric acid is supplied through the collection solution supply conduit 18 into the chambers 8A, 8C, 8E, and 8F. Then, the water or dilute nitric acid absorbs both nitric ions that have passed through the negative ion-exchange membranes A₂, A₄, and A₆ and moved to the chambers 8A, 8C, and 8E, and hydrogen ions that have passed through the negative ion-exchange membranes C₂, C₄, and C₆ and that have moved to the chambers 8C, 8E and 8G. Consequently, a collection solution of nitric acid whose concentration has become greater than before is produced. Thus, the acid electrolyte is separated into the collection solution and the deacidified solution. Non-alkaline metal ions have been removed from the collection solution.

At this time, when the three-way valve V is switched to a position such that a channel connecting the electrodialysis bath 2 and the collection solution reservoir 16 is formed by the collection solution drawing conduit 12, the collection solution passes through the collection solution drawing conduit 12, and is then reserved at the collection solution reservoir 16.

When the concentration meter 16A detects that the concentration of nitric acid in the collection solution reserved at the collection solution reservoir 16 has reached a predetermined concentration value, the concentration meter 16A instructs a motor (not shown) to switch the three-way valve V. Upon receiving this instruction, the motor is driven to switch the three-way valve V, and causes the collection solution drawing conduit 12 to form a channel connecting the elecrodialysis bath 2 and the electrolyte circulation bath 30. In the present invention, one or more concentration meter which determine the concentration of acid can be provided suitably at any position of the device.

As described above, due to switching of the three-way valve V, the collection solution is introduced into the electrolyte circulation bath 30. At this point, since the collection solution contains few aluminum ions, the concentration of aluminum ions in the acid electrolyte in the electrolyte circulation bath 30 can be kept constant by controlling a flow rate of the collection solution flowing into the electrolyte circulation bath 30.

Meanwhile, the deacidified solution produced at the chambers 8B, 8D, and 8F is collected through the deacidified solution drawing conduit 14. Namely, the solution which includes aluminum sulfate can be drawn from the first chamber of each set.

Thus, in the above-described electrolytic surface-roughening treatment device, the acid electrolyte used in the electrolyte surface-roughening section 20 is collected and sulfuric acid is added thereto. Due to electrodialysis of this acid electrolyte, the acid electrolyte is separated into a collection solution having high purity nitric acid and a deacidified solution having hardly any nitric acid remaining therein. The collection solution can be reused in the electrolytic surface-roughening treatment device 20. Consequently, an amount of nitric acid used by the electrolytic surface-roughening treatment device 20 can be greatly reduced, and accumulation of aluminum ions in the acid electrolyte of the AC electrolyte bath 24 can be prevented.

Both the positive ion-exchange membranes and the negative ion-exchange membranes used by the electrodialyser 10 are ordinary membranes that are not special or expensive membranes, such as bipolar membranes. Accordingly, membranes for the present invention can be manufactured inexpensively.

Since the electrodialyser 10 conducts the electrodialysis under acid conditions, a theoretical decomposition voltage is low, and very little electricity is consumed.

Most of the metal ions dissolved in the acid electrolyte are aluminum ion originating from the aluminum web W. Ordinarily, substantially pure aluminum is used for the aluminum web W. Further, in the sulfuric acid addition bath 40, sulfuric acid is added to the acid electrolyte in an amount that corresponds to the concentration of aluminum ions in the acid electrolyte. Therefore, since aluminum sulfate in the deacidified solution which is collected from the electrodialyser 10 is of high purity, the aluminum sulfate can be used unchanged as an aggregated agent for a water treatment.

As a result, in the electrolytic surface-roughening treatment device, almost no waste is discharged.

### EXAMPLES

The present invention will next be explained in more detail by way of an Example and Comparative Examples, which should not be construed as limiting the invention.

### Example 1:

An aluminum web W was surface-roughened by electrolysis using an electrolyte surface-roughening treatment device as shown in Fig. 2, while an amount in which sulfuric acid was used and running costs were evaluated. The electrolyte surface-roughening conditions were as follows:

| | |
|---|---|
| Width of aluminum web: | 1,000 mm |
| Feed speed of aluminum web | 60 m/min |
| Acid electrolyte: concentration of nitric acid | 10 g/liter |
| Concentration of aluminum ions | 5 g/liter |

Results are shown in table 1.

### Comparative Example 1:

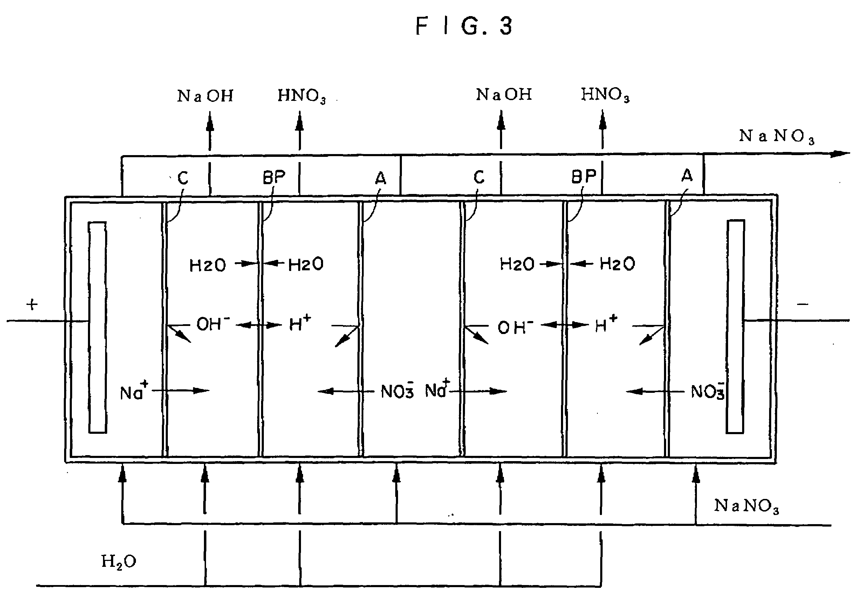

By using an electrolyte surface-roughening treatment device of the same type as the electrolyte surface-roughening section 20 in Fig. 2, electrolysis was conducted under the same conditions as in Example 1, while the electrolysis was conducted such that a part of an acid electrolyte was continuously drawn and the drawn electrolyte was neutralized with an aqueous solution of sodium hydroxide. Thus obtained aluminum hydroxide was removed by aggregation/precipitation, and nitric acid was collected by electrodialysis as shown in Fig. 3. During the electrodialysis, as shown in Fig. 3, an electrodialysis bath whose interior was divided by positive ion-exchange membranes C, bipolar type ion-exchange membranes BP, and negative ion-exchange membranes A was used. Evaluation results of amounts in which the nitric acid was used and running costs are shown in table 1.

### Comparative Example 2:

An electrolytic surface-roughening treatment and electrodialysis were conducted in the same manner as Example 1 except that the electrodialysis was conducted without adding sulfuric acid to the acid electrolyte drawn from the electrolytic surface-roughening device. The amounts in which nitric acid was used and running costs were evaluated. Results are shown in table 1.

### Comparative Example 3:

Using an electrolytic surface-roughening treatment device of the same type as the electrolytic surface-roughening section 20 in Fig. 2, electrolysis was conducted under the same conditions as in Example 1, while the electrolysis was conducted. During the electrolytic surface-roughening treatment conducted under the same conditions as that in Example 1, a portion of the acid electrolyte was drawn and diluted with water. At the same time, nitric acid was added to the resultant electrolyte such that concentrations of aluminum ions and nitric acid were kept constant. Then, a portion of the acid electrolyte was returned to the electrolytic surface-roughening treatment device, and the remaining electrolyte was discharged as waste fluid. Amounts in which the nitric acid was used and running costs were evaluated. Evaluation results are shown in table 1.

**Table 1**

| | Aluminum ion removal method | Nitric acid recovery method | Nitric acid consumption amount (g/m²) | Running costs |
|---|---|---|---|---|
| Example 1 | Electrodialysis after the addition of sulfuric acid | Electrodialysis after the addition of sulfuric acid | 5 | low |
| Comparative Example 1 | Neutralization/ aggregation/ electrodialysis | Electrodialysis | 5 | high |
| Comparative Example 2 | Electrodialysis | Electrodialysis | 15 | high |
| Comparative Example 3 | Dilution with water | None | 20 | high |

As shown in table 1, during the electrolytic surface-roughening step for fabricating a planographic printing plate, if circulation and reuse of an acid electrolyte were conducted by using the method of treating the acid treatment solution of the present invention, excellent effects could be obtained. Namely, when Example 1 is compared to a case in which the acid electrolyte was neutralized with sodium hydroxide, the thus obtained aluminum hydroxide was aggregated and removed, and a remaining supernatant liquid was electrodialyzed (Comparative Example 1), or to a case in which the acid electrolyte was electrodialyzed without adding sulfuric acid thereto (Comparative Example 2), or to a case in which the acid electrolyte was diluted with water and nitric acid was added thereto (Comparative Example 3), it can be seen that the amounts of nitric acid used can be reduced a great deal, and the running costs are lower.

As described above, the present invention provides a method of treating an acid treatment solution which method is capable of significantly reducing an amount in which waste fluid is discharged, of effectively removing metal ions such as aluminum ions, and of significantly reducing an amount in which nitric acid or hydrochloric acid is used, and provides a device suitably used for realizing the method. Further, the present invention provides a method of fabricating a support for a planographic printing plate which method includes an electrolytic surface-roughening step, in which an acid electrolyte is reused by application of the method of treating the acid treatment solution to the electrolytic surface-roughening step so that a usage amount of the acid electrolyte can be reduced greatly.

## Claims

1. A method of treating an acid treatment solution which includes at least one of nitric acid and hydrochloric acid for removing non-alkaline metal ions therefrom, the method comprising the steps of:
determining an amount of the non-alkaline metal ions in the acid treatment solution;
adding a sulfuric acid to the acid treatment solution in an amount based on the amount of the non-alkaline metal ions to produce sulfate of the non-alkaline metal;
recovering an acid treatment solution from which the sulfate is separated such that the sulfate is separated from the acid treatment solution to which the sulfuric acid has been added.

2. The method according to claim 1, wherein the step of recovering an acid treatment solution comprises the sub-step of performing electrodialysis using an ion-exchange membrane.

3. The method according to claim 2, wherein the ion-exchange membrane comprise at least one positive ion-exchange membrane and at least one negative ion-exchange membrane.

4. The method according to claim 1, wherein the non-alkaline metal is aluminum.

5. The method according to claim 4, wherein the acid treatment solution that is to be treated is an acid electrolysis that has been used for a process of electrolytically surface-roughening an aluminum plate in a method for fabricating a support of a planographic printing plate.

6. The method according to claim 1, wherein the step of recovering an acid treatment solution comprises the sub-steps of:
preparing an electrodialysis bath that contains at least an anode, cathode and at least one set of membranes which is located between the anode and the cathode, each set of membranes including negative and positive ion-exchange membranes, with the negative ion-exchange membrane of each set provided in the bath being disposed closer to the anode than the positive ion-exchange membrane of the set such that a first chamber is formed between the negative and positive ion-exchange membranes, and second chambers being formed at portions of the electrodialysis bath other than the first chamber of each set;
supplying the acid treatment solution to which the sulfuric acid has been added to the first chamber of each set;
supplying at least one liquid selected from a group consisting of water, a dilute nitric acid, and a dilute hydrochloric acid to each of the second chambers;
performing electrodialysis by supplying electric current to the anode and the cathode; and
collecting the water or the acid treatment solution from which the sulfate is separated from each of the second chambers.

7. The method according to claim 6, further comprising the step of drawing a liquid which includes sulfate from the first chamber of each set.

8. A device for treating an acid treatment solution which includes at least one of nitric acid and hydrochloric acid, for removing non-alkaline metal ions therefrom, the device comprising:
a sulfuric acid addition component which adds sulfuric acid to the acid treatment solution in an amount based on an amount of the non-alkaline metal ions in the acid treatment solution to produce sulfate of non-alkaline metal; and
an acid treatment solution recovery component which separates the sulfate from the acid treatment solution to which the sulfuric acid has been added and recovers the acid treatment solution.

9. The device according to claim 8, wherein the electrodialysis bath comprises an anode, a cathode and at least one set of membranes which is located between the anode and cathode, each set of membranes including negative and positive ion-exchange membranes, with the negative ion-exchange membrane of each set provided in the bath being disposed closer to the anode than the positive ion-exchange membrane of the set such that a first chamber is formed between the negative and positive ion-exchange membranes, and second chambers being formed at portions of the electrodialysis bath other than the first chamber of each set.

10. A method for fabricating a support for a planographic printing plate, the method comprising the steps of:
electrolytically surface-roughening an aluminum plate by an AC electrolysis thereon in an acid electrolyte that contains at least one of nitric acid and hydrochloric acid, in an AC electrolysis bath;
drawing at least a portion of the acid electrolyte in the AC electrolysis bath out of the AC electrolysis bath;
adding sulfuric acid to the acid electrolyte that has been drawn out of the AC electrolysis bath, in an amount based on an amount of aluminum ions in the acid electrolyte that has been drawn, so that aluminum sulfate is generated; and
recovering an acid electrolyte from the acid electrolyte to which the sulfuric acid has been added, by separating the aluminum sulfate; and
returning the recovered acid electrolyte to the AC electrolysis bath.
